# Europäisches Patentamt

# European Patent Office

# Office européen des brevets

(19)

(11) Veröffentlichungsnummer: **0 208 960**
**B1**

(12) # EUROPÄISCHE PATENTSCHRIFT

(45) Veröffentlichungstag der Patentschrift:
**31.08.88**

(51) Int. Cl.⁴: **B 60 S 1/32,** B 60 S 1/52

(21) Anmeldenummer: **86108646.0**

(22) Anmeldetag: **25.06.86**

(54) **Einteiliger Scheibenwischerarm mit Scheibenwaschwasserleitung für Kraftfahrzeuge.**

(30) Priorität: **01.07.85 FR 8509992**

(43) Veröffentlichungstag der Anmeldung:
**21.01.87 Patentblatt 87/4**

(45) Bekanntmachung des Hinweises auf die Patenterteilung:
**31.08.88 Patentblatt 88/35**

(84) Benannte Vertragsstaaten:
**DE GB IT**

(56) Entgegenhaltungen:
**DE-A-2 942 086**
**DE-B-1 087 482**
**FR-A-2 119 130**
**US-A-3 854 161**
**US-A-4 133 071**

(73) Patentinhaber: **PAUL JOURNEE S.A., 39, Avenue Marceau, F-92400 Courbevoie (FR)**

(72) Erfinder: **Journee, Marice, Le Bois Hédouin, F-60240 Reilly (FR)**
Erfinder: **Percebois, Serge, 23 Résidence Bellevue, F-60240 Chaumont- en- Vexin (FR)**

(74) Vertreter: **Patentanwaltsbüro Cohausz & Florack, Postfach 14 01 47, D-4000 Düsseldorf 1 (DE)**

EP 0 208 960 B1

## Beschreibung

Die Erfindung bezieht sich auf einen einteiligen Wischarm mit Scheibenwaschwasserleitung für Kraftfahrzeuge.

Wischarme tragen an einem Ende ein Wischblatt und sind an ihrem anderen Ende an einer Welle befestigt, der eine Pendelbewegung mitgeteilt werden kann. Diese u.a. aus der US-A-4 133 071 und FR-A-2 119 130 bekannten Arme werden im allgemeinen durch einen metallischen Stab gebildet, an den ein Gehäuse gefalzt ist, das an eine Nabe, die an der Antriebswelle befestigt werden kann, angelenkt ist. Eine Zug- oder Druckfeder wirkt auf den Stab, um das Ende des Arms, der das Wischblatt trägt, auf die zu wischende Scheibe zu drücken. Zum Anspritzen der Windschutzscheibe mit Waschwasser muß am Arm eine Leitung angebracht werden.

Die Herstellung eines solchen Arms ist aufwendig, weil Metalle Verwendung finden, die geformt und/oder mechanisch bearbeitet werden müssen, die Bauteilen die im übrigen Federbefestigungsmittel umfassen, durch Falzen und Mieten zusammenzubauen sind und das Ganze dann lackiert oder jeder beliebigen anderen Zierbehandlung unterworfen wird. Ein solcher Zusammenbau ist zudem sehr schwer, was die Leichtigkeit des Fahrzeugs, an dem er angebaut ist, störend beeinflußt. Der Gestehungspreis wird weiter durch den Einbau der Waschwasserleitung erhöht.

Ziel der Erfindung ist es, diesen Nachteilen bekannter Wischarme abzuhelfen dank eines sehr wirtschaftlichen einteiligen Wischarms aus Kunststoff mit erheblich geringerem Gewicht, der keiner Montage und Befestigungsarbeit bedarf, der es ermöglicht, die üblichen Lackier- und Verzierungsarbeiten zu vermeiden und eine Leitung für die Scheibenwaschflüssigkeit enthält.

Zu diesem Zweck wird der erfindungsgemäße Wischerarm dadurch gekennzeichnet, daß er aus einem geformten Kunststoffkörper besteht, der ein Körperteil und ein Deckelteil enthält und das Deckelteil die Längsleitung schließt, in dem es an einem oder zwei Längsrändern mit dem Körperteil geschweißt wird.

In einer Ausführungsform umfaßt das geformte Körperteil ein im allgemeinen U-förmiges Profil, an das das Deckelteil geschweißt ist.

In einer Ausführungsvariante besteht der Körper aus zwei Schalen, die über ein mit ihnen angeformtes Scharnier miteinander verbunden sind, wobei dieser Zusammenbau entlang des genannten Scharniers gefaltet und entlang einer Berührungslinie geschweißt ist. In einer Ausführungsform befindet sich das Scharnier an der Seite. In einer anderen Ausführungsform befindet sich das Scharnier oben.

Vorzugsweise umfaßt der Körper eine für die Feder des Wischarms aufgesteckte Ankuppelachse. Die Ankuppelachse kann von einem Abguß abgeformt sein. Im Fall eines oberen Scharniers kann die Ankuppelachse zwischen den beiden Schalen durch Schweißen eingeschlossen sein.

Vorzugsweise umfaßt der Körper an seinem nabenseitigen Ende seitliche Aussparungen zum Anlenken an die genannte Nabe. In einer bevorzugten Ausführungsform umfaßt das genannte Ende zwei seitliche Nasen zum Anlenken einer Nabenkappe.

An seinem der Nabe entgegengesetzten Ende kann der Körper eine geformte Befestigung für ein Wischblatt aufweisen.

Die Erfindung wird besser verständlich beim Lesen der folgenden Beschreibung unter Bezugnahme auf die beigehefteten Zeichnungen in der:

| Fig. 1 | in Seitenansicht einen Wischarm nach einer ersten Ausführungsform der Erfindung darstellt; |
| Fig. 2 | eine Draufsicht des Wischarms der Fig. 1 ist; |

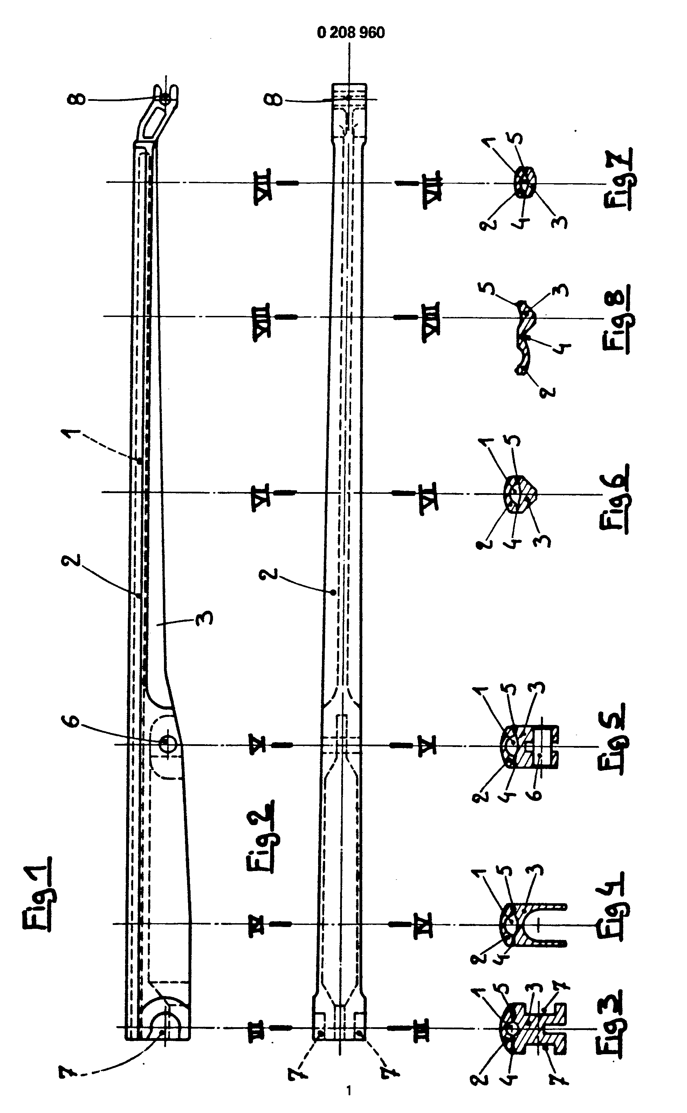

Fig. 3, 4, 5, 6 und 7 entsprechende Schnittansichten entlang

den Linien III-III, IV-IV, V-V, VI-VI und VII-VII in Fig. 2 sind;

| Fig. 8 | eine Schnittansicht entlang der Linie VIII-VIII in Fig. 2 vor dem Schweißen ist; und |
| Fig. 9-16 | analog zu den Figuren 1-8 eine Ausführungsvariante der Erfindung zeigen. |

Der erfindungsgemäße Wischarm wird gebildet durch ein längliches Körperteil, den man durch Formen eines Kunststoffes erhält und der eine durch Schweißen wieder geschlossene Längsleitung 1 enthält.

In einer Ausführungsform der Fig 1 - 8 wird die Leitung 1 durch Anschweißen eines oberen Deckelteil 2 geschlossen. Das Deckelteil 2 kann mit dem Körperteil 3 des Wischarms geformt werden, indem man in bekannter Weise ein seitliches Scharnier 4 anformt, worauf das Deckelteil dann um dieses Scharnier 4 geklappt und entlang seinem entgegengesetzten Rand 5 wird geschweißt wird, wie in Fig. 8 veranschaulicht. Das Deckelteil 2 könnte aufgesteckt und entlang den beiden Längsrändern geschweißt werden. In diesem Fall kann seine Stellung frei gewählt werden, z. B. unten oder oben oder auch seitlich.

Das Körperteil 3 trägt eine Achse 6 zum Befestigen der Feder des Wischarms. Die Achse 6 kann von einem Abguß mit dem Körper 3 abgeformt oder auch seitlich eingeführt werden, indem man zu diesem Zweck eine seitliche Öffnung im Körper 3 vorsieht.

Da er an seinem vorderen Ende an der Nabe (nicht dargestellt) angelenkt werden muß, umfaßt der Körper 3 seitliche Aussparungen 7 zum Einrasten in die Nabe. An seinem entgegengesetzten Ende umfaßt der Wischarm eine angeformte Gabel 8 zur unmittelbaren Befestigung einer Achse des Wischblattes. Dieses Ende kann ebenfalls mit einer abnehmbaren Befestigung (nicht dargestellt) ausgertistet werden.

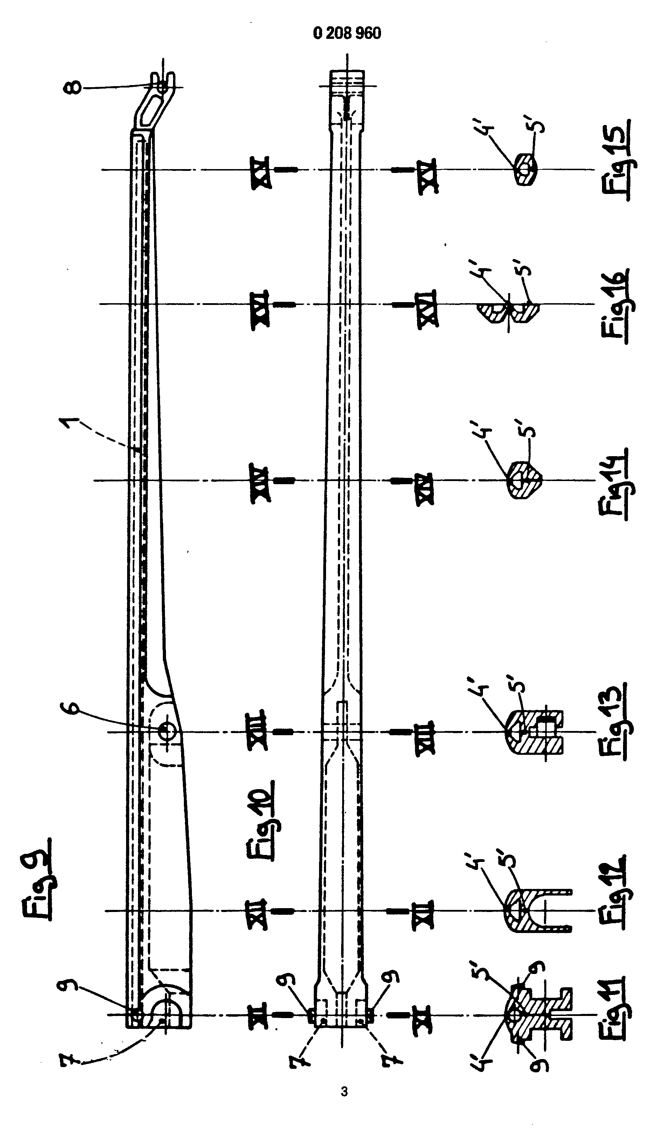

Die Variante der Fig 9 - 16 entspricht der der Fig 1 - 8, wenn nur das Scharnier 4' an der oberen Kante des Arms angeordnet ist, wobei die Schweißnaht entlang einer in der Vertikalebene (in der Zeichnung) gelegenen Linie 5' hergestellt wird, die durch das Scharnier 4' verläuft. Im übrigen trägt der Körper 3 nahe jeder seitlichen Aussparung 7 eine seitliche Warze 9, die zum Anlenken einer Nabenkappe (nicht dargestellt) dient.

**Patentansprüche**

1. Einteiliger Scheibenwischarm mit Scheibenwaschwasserleitung für Kraftfahrzeuge, dadurch gekennzeichnet, daß er aus einem geformten Kunststoffkörper besteht, der ein Körperteil (3) und ein Deckelteil (2) enthält und das Deckelteil (2) die Längsleitung schließt, in dem es an einem oder zwei Längsrändern mit dem Körperteil (3) angeschweißt wird.

2. Wischarm gemäß Anspruch 1, dadurch gekennzeichnet, daß das geformte Körperteil (3) ein im allgemeinen U-förmiges Profil umfaßt, an das das Deckelteil (2) geschweißt ist.

3. Wischarm gemäß Anspruch 1, dadurch gekennzeichnet, daß der Körper aus zwei Schalen besteht, die über ein mit den Schalen geformtes Scharnier (4, 4') verbunden sind, wobei das Ganze entlang dem genannten Scharnier umgelegt und entlang einer Berührungslinie (5, 5') geschweißt ist.

4. Wischarm gemäß Anspruch 3, dadurch gekennzeichnet, daß sich das Scharnier (4) an der Seite befindet.

5. Wischarm gemäß Anspruch 3, dadurch gekennzeichnet, daß sich das Scharnier (4') oben befindet.

6. Wischarm gemäß einem der Ansprüche 1 bis 5, dadurch gekennzeichnet, daß der Körper eine aufgesteckte Ankuppelachse (6) für die Feder des Wischarms umfaßt.

7. Wischarm gemäß Anspruch 6, dadurch gekennzeichnet, daß die Ankuppelachse (6) von einem Abguß abgeformt ist.

8. Wischarm gemäß Anspruch 6, dadurch gekennzeichnet, daß die Ankuppelachse (6) zwischen den beiden Schalen durch Schweißen eingeschlossen ist.

9. Wischarm gemäß Anspruch 6, dadurch gekennzeichnet, daß die Ankuppelachse (6) über eine seitliche Öffnung eingeführt wird.

10. Wischarm gemäß einem der Ansprüche 1 bis 9, dadurch gekennzeichnet, daß der Körper an seinem nabenseitigen Ende seitliche Aussparungen (7) für das Anlenken an der genannten Nabe umfaßt.

11. Wischarm gemäß Anspruch 10, dadurch gekennzeichnet daß das genannte Ende zwei seitliche Warzen (9) für das Anlenken einer Nabenkappe umfaßt.

12. Wischarm gemäß einem der Ansprüche 1 bis 11, dadurch gekennzeichnet, daß an seinem der Nabe entgegengesetzten Ende der Körper geformte Befestigung (8) für ein Wischblatt umfaßt.

**Claims**

1. One-piece screen wiper arm with screen washing water conduit for motor vehicles, characterised in that it consists of a moulded synthetic plastics material body which contains a body part (3) and a lid part (2) and the lid part (2) closes the longitudinal conduit, in that it is welded with the body part (3) on one or two longitudinal edges.

2. Wiper arm according to Claim 1, characterised in that the moulded body part (3) possesses a generally U-shaped profile to which the lid part (2) is welded.

3. Wiper arm according to Claim 1, characterised in that the body consists of two shells which are connected through a hinge (4, 4') moulded with the shells, the whole being turned over along the said hinge and welded along a contact line (5, 5').

4. Wiper arm according to Claim 3, characterised in that the hinge (4) is situated on the side.

5. Wiper arm according to Claim 3, characterised in that the hinge (4') is situated at the top.

6. Wiper arm according to one of Claims 1 to 5, characterised in that the body comprises a pushed-on coupling spindle (6) for the spring of the wiper arm.

7. Wiper arm according to Claim 6, characterised in that the coupling spindle (6) is formed by a casting.

8. Wiper arm according to Claim 6, characterised in that the coupling spindle (6) is enclosed between the two shells by welding.

9. Wiper arm according to Claim 6, characterised in that the coupling spindle (6) is introduced through a lateral opening.

10. Wiper arm according to one of Claims 1 to 9, characterised in that the body comprises lateral apertures (7) at its hub end for the articulated attachment to the said hub.

11. Wiper arm according to Claim 10, characterised in that the said end comprises two lateral nipples (9) for the articulated attachment of a hub cap.

12. Wiper arm according to one of Claims 1 to 11, characterised in that at its end opposite to the hub the body comprises a shaped fastening (8) for a wiper blade.

**Revendications**

1. Bras d'essuie-glace monobloc avec conduit d'arrosage de vitre pour véhicules automobiles, caractérisé par le fait qu'il est constitué d'un corps moulé (3) en matière synthétique qui comprend un couvercle dans le matériau du corps et le couvercle ferme le conduit longitudinal par le fait qu'il est soudé sur un bord longitudinal ou les deux.

2. Bras d'essuie-glace selon la revendication 1, caractérisé par le fait que le corps moulé (3) comporte un profilé en forme générale de U sur lequel est soudé le couvercle (2).

3. Bras d'essuie-glace selon la revendication 1, caractérisé par le fait que le corps est composé de deux coquilles qui sont reliées par une charnière (4, 4') moulée avec les coquilles, l'ensemble étant replié le long de ladite charnière et soudé le long d'une ligne de contact (5, 5').

4. Bras d'essuie-glace selon la revendication 3, caractérisé par le fait que la charnière (4) se trouve sur le côté.

5. Bras d'essuie-glace selon la revendication 3, caractérisé par le fait que la charnière (4') se trouve au-dessus.

6. Bras d'essuie-glace selon l'une des revendications 1 à 5, carctérisé par le fait que le corps comprend un axe d'accouplement (6) rapporté pour le ressort du bras d'essuie-glace.

7. Bras d'essuie-glace selon la revendication 6, caractérisé par le fait que l'axe d'accouplement (6) est formé par un surmoulage.

8. Bras d'essuie-glace selon la revendication 6, caractérisé par le fait que l'axe d'accouplement (6) est enfermé entre les deux coquilles par soudage.

9. Bras d'essuie-glace selon la revendication 6, caractérisé par le fait que l'axe d'accouplement (6) est introduit par une ouverture latérale.

10. Bras d'essuie-glace selon l'une des revendications 1 à 9, caractérisé par le fait que le corps comporte, à son extrémité adjacente au moyeu, des évidements latéraux (7) pour l'articulation sur ledit moyeu.

11. Bras d'essuie-glace selon la revendication 10, caractérisé par le fait que ladite extrémité comporte deux tétons latéraux (9) pour l'articulation d'un cache-moyeu.

12. Bras d'essuie-glace selon l'une des revendications 1 à 11, caractérisé par le fait qu'à son extrémité opposée au moyeu, le corps comporte une attache (8) pour balai d'essuie-glace venue de moulage.

0 208 960

Fig 1

Fig 2

Fig 3

Fig 4

Fig 5

Fig 6

Fig 8

Fig 7

Fig 9

Fig 10

Fig 11    Fig 12    Fig 13    Fig 14    Fig 16    Fig 15

0 208 960